# EUROPEAN PATENT APPLICATION

(11) **EP 2 059 040 A2**
(43) Date of publication of application: **13.05.2009**
(21) Application number: 08153800.1
(22) Date of filing: 31.03.2008
(51) Int. Cl.: H04N 7/16

(54) **Method for providing a video signal and descramble card and video apparatus using the same**

(30) Priority: 21.08.2007 KR 20070084123
(71) Applicant: Samsung Electronics Co., Ltd., Suwon-si, Gyeonggi-do 442-742 (KR)
(72) Inventor: Choi, Jin-su, Seoul (KR)
(74) Representative: Waddington, Richard

(57) **Abstract**

A method for providing a video signal, and a descramble card (115) and a video apparatus using the same are disclosed. The video apparatus includes a first interface (110) which receives a scrambled video signal, and outputs the scrambled video signal, a second interface (120) which transmits the scrambled video signal to a storage medium (125) connected with the video apparatus, and a controller (130) which controls the first interface (110) to transmit the scrambled video signal to the second interface (120). Accordingly, a personal video recorder (PVR) function is provided to a premium broadcast content.

## Description

### BACKGROUND OF THE INVENTION

### 1. Field of the Invention

Methods, cards, and apparatuses consistent with the present invention relate to providing a video signal, and more particularly, to a method for providing a video signal enabling a user to record and replay broadcast contents, and a descramble card and a video apparatus using the same.

### 2. Description of the Related Art

In digital broadcasting, a public broadcast provider or a broadcast provider having sufficient revenue from advertising usually provides free contents. However, a premium content provider limits viewing access to specific viewers, for example, to viewers who paid television subscription fees for its premium channel.

This conditional access, or scrambling, includes a scramble process which encrypts a part or entire transport stream of a broadcast signal so that a subscriber can exclusively access a channel. An algorithm used in such a conditional access system is strictly maintained in secrecy, because this is related to broadcasting copyrights. Accordingly, each of the broadcasting providers provides each of their own conditional access apparatus to allow its users to access the channel.

A conditional access apparatus includes a digital video broadcasting-common interface (DVB-CI) card or a cable card. The DVB-CI card is a conditional access apparatus for a DVB type of terrestrial digital broadcast which is a European digital broadcasting standard, and a cable card is a conditional access apparatus for an open cable digital broadcast which is a digital broadcasting standard in North America.

To access a premium channel, a broadcast receiving apparatus has to have a descramble card such as a DVB-CI card or a cable card provided by a broadcast provider.

A personal video recorder (PVR) function enables a user to record a broadcast content in an internal recoding medium. However, if the PVR function enables recording of the broadcast contents of the premium channel, the user may provide other viewers who have not subscribed to the premium channel with the recorded broadcast contents.

Broadcasting providers consider a conditional access system important in preventing unauthorized access to premium broadcast contents. Therefore, there is a need for a user to use the PVR function for premium channel broadcast while preventing unauthorized view of the broadcast contents.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

The present invention provides a video apparatus storing a scrambled video signal in a storage medium and a descramble card so that a user can use a personal video recorder (PVR) function for premium channel broadcast, and a method for providing a video signal using the same.

The present invention also provides a video apparatus storing a video signal in a storage medium using the same type interface, and a method for providing a video signal using the same.

According to the present invention there is provided an apparatus and method as set forth in the appended claims. Other features of the invention will be apparent from the dependent claims, and the description which follows.

According to an exemplary aspect of the present invention, there is provided a video apparatus comprising a first interface which receives a scrambled video signal, and outputs the scrambled video signal; a second interface which transmits the scrambled video signal to a storage medium connected with the video apparatus; and a controller which controls the first interface to transmit the scrambled video signal to the second interface.

The controller may control the second interface to store the scrambled video signal in the storage medium in a scrambled state.

The first interface and the second interface may be the same type of interface.

The first interface and the second interface may be in compliance with the personal computer memory card international association (PCMCIA) standard.

The first interface may be connected with a descramble card which descrambles the scrambled video signal.

The apparatus may further comprise a video processor which performs a signal processing of a descrambled video signal, wherein the first interface receives the descrambled video signal from a descramble card, and outputs the descrambled video signals to the video processor, and the controller controls the first interface to transmit the descrambled video signal to the video processor.

The storage medium connected with the second interface may be a nonvolatile memory.

The nonvolatile memory may be a flash memory.

The scrambled video signal may be a video signal of a premium broadcast content.

According to another aspect of the present invention, there is provided a method for providing a video signal in a video apparatus comprising receiving a scrambled video signal; and outputting the scrambled video signal by a first interface; and controlling a second interface to transmit the scrambled video signal output from the first interface to a storage medium connected with the video apparatus.

The scrambled video signal may be stored in the storage medium in a scrambled state.

The first interface and the second interface may be the same type of interface.

The first interface and the second interface may be in compliance with the personal computer memory card international association (PCMCIA) standard.

The method may further comprise retrieving the scrambled video signal from the storage medium and transmitting the retrieved video signal to a descramble device; and descrambling the retrieved video signal by the descramble device.

The method may further comprise receiving a descrambled video signal corresponding to the scrambled video signal by the first interface; and transmitting the descrambled video signal output from the first interface to a video processor.

The storage medium connected with the second interface may be a nonvolatile memory.

The nonvolatile memory may be a flash memory.

The scrambled video signal may be a video signal of a premium broadcast content.

According to another aspect of the present invention, there is provided a descramble card comprising an interface which receives a scrambled video signal; and a controller which controls the interface to store the scrambled video signal in a storage medium, and descrambles the scrambled video signal.

The controller may retrieve the scrambled video signal from the storage medium to descramble the retrieved video signal.

The descramble card may be a digital video broadcasting-common interface (DVB-CI) card.

According to another aspect of the present invention, there is provided a video apparatus comprising a first interface which receives a video signal, and outputs the received video signal; a second interface which transmits the received video signal to a storage medium connected with the video apparatus; and a controller which controls the first interface to directly transmit the video signal output from the first interface to the second interface, wherein the first interface and the second interface are the same type of interface.

The apparatus may further comprise a bus which electrically connects the first interface with the second interface, wherein the controller controls the first interface to directly transmit the video signal output from the first interface through the bus to the second interface.

According to another aspect of the present invention, there is provided a method for providing a video signal comprising receiving a video signal, and outputting the received video signal by a first interface; and directly receiving the video signal output from the first interface, and transmitting the received video signal to a storage medium by a second interface, wherein the first interface and the second interface are the same type of interface.

The video signal output from the first interface may be received by the second interface through a bus which electrically connects the first interface with the second interface.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a block diagram illustrating a digital broadcasting system applicable to an exemplary embodiment of the present invention;

FIG. 2 is a flowchart provided to explain a method for providing a video signal according to an exemplary embodiment of the present invention;

FIG. 3 is a view illustrating a flow of a scrambled video signal and a descrambled video signal in a premium broadcast viewing mode according to an exemplary embodiment of the present invention;

FIG. 4 is a view illustrating a flow of a scrambled video signal and a descrambled video signal in a premium broadcast recording mode according to an exemplary embodiment of the present invention; and

FIG. 5 is a view illustrating a flow of a scrambled video signal and a descrambled video signal in a recorded premium broadcast playing back mode according to an exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

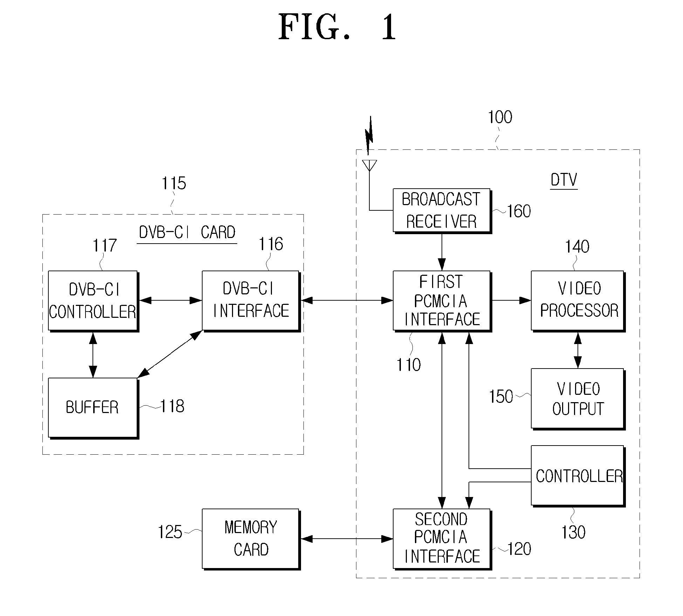

FIG. 1 is a block diagram illustrating a digital broadcasting system applicable to an exemplary embodiment of the present invention. Referring to FIG. 1, a digital broadcasting system may comprise a digital television (DTV) 100, a digital video broadcasting-common interface (DVB-CI) card 115, and a memory card 125.

The DTV 100 provides a user with broadcast contents received over wire or wirelessly through a display. The DTV 100 may also provide the user with a video signal received from an external input apparatus connected over wire or wirelessly through the display. Also the DTV 100 may play back files such as a motion picture file, a still image file, and a music file stored in a memory card connected with the DTV 100 to provide the user with the files.

Referring to FIG. 1, the DTV 100 may comprise a broadcast receiver 160, a first personal computer memory card international association (PCMCIA) interface 110, a second PCMCIA interface 120, a controller 130, a video processor 140, and a video output 150.

The broadcast receiver 160 receives a broadcast signal from a satellite or a broadcasting station over wire or wirelessly, and demodulates the received broadcast signal. The broadcast receiver 160 can receive a premium broadcast content from a premium channel provider.

The first PCMCIA interface 110 is connected with a descramble card to control access to the premium broadcast content. A PCMCIA interface is generally used to connect a notebook computer with a flash memory. However, a DTV may have a PCMCIA interface slot to support a descramble card for a conditional access to a premium broadcast content. For example, the DVB-CI card 115 may be connected with the DTV 100 through the PCMCIA interface.

The second PCMCIA interface 120 is connected with the memory card 125 which may store a video signal. The PCMCIA interface is an international standard regarding a PC memory card that is compliant with the standard of the PCMCIA. A memory card, often referred to as a flash memory, is a recording medium which has faster executing speed and less power consumption than those of auxiliary memory such as a hard disc. The PCMCIA interface may be applicable to a DTV to embody a personal video recorder (PVR). The memory card 125 connected with the second PCMCIA interface 120 may be a flash memory card.

As the first PCMCIA interface 110 and the second PCMCIA interface 120 may use the same type of interface, the first and second PCMCIA interfaces 110 and 120 may transmit a video signal through a local bus without converting a data format.

However, it is not necessary to use the PCMCIA interface, but other types of the interface may be used. Additionally, the first and second PCMCIA interfaces 110 and 120 may be of the different type of interface.

The controller 130 controls the first PCMCIA interface 110 and the second PCMCIA interface 120. The controller 130 controls the first PCMCIA interface to receive a scrambled broadcast signal from the broadcast receiver 160, and to transmit the received broadcast signal to the DVB-CI card 115 which is connected with the DTV 100. In addition, the controller 130 may control the first PCMCIA interface 110 to receive a scrambled video signal or a descrambled video signal from the DVB-CI card 115.

If the first PCMCIA interface 110 receives the scrambled video signal from the DVB-CI card 115, the controller 130 may control the first PCMCIA interface 110 to transmit the scrambled video signal to the second PCMCIA interface 120, and the second PCMCIA interface 120 to store the transmitted scrambled video signal in the memory card 125. If the first PCMCIA interface 110 receives the descrambled video signal from the DVB-CI card 115, the controller 130 controls the first PCMCIA interface 110 to transmit the descrambled video signal to the video processor 140 such that the transmitted descrambled video signal is displayed on a screen.

If the controller 130 receives a command for executing PVR function from the user, the controller controls the second PCMCIA interface 120 to transmit the scrambled video signal stored in the memory card 125 to the first PCMCIA interface 110.

The controller 130 may control a DVB-CI controller 117 to determine whether to descramble the scrambled video signal transmitted to the DVB-CI card 115. For example, if the DTV 100 is in a general playback mode, the controller 130 controls the DVB-CI controller 117 to descramble the scrambled video signal transmitted to the DVB-CI card 115. On the other hand, if the DTV 100 is in a recording mode, the controller 130 controls the DVB-CI controller 117 to transmit the scrambled video signal to the first PCMCIA interface 110.

The video processor 140 performs a signal processing such as a video decoding, a video scaling, and an audio decoding of the descrambled video signal output from the first PCMCIA interface 110. The video processor 140 transmits the processed video signal to the video output 150.

The video output 150 displays the video signal output from the video processor 140 on a display, or outputs the video signal to an exterior apparatus which is connected through an external output terminal.

The DVB-CI card 115 is one type of a descramble card which descrambles the scrambled video signal. A premium broadcast provider transmits a scrambled video signal of a premium broadcast content, and controls an access to the premium content so that a user can watch the premium broadcast content only in the DTV 100 having the DVB-CI card 115. The DVB-CI card 115 operates as a conditional access apparatus. Components of the DVB-CI card 115 will be described below in detail.

Referring to FIG. 1, the DVB-CI card 115 may comprise a DVB-CI interface 116, the DVB-CI controller 117, and a buffer 118.

The DVB-CI interface 116 connects physically and electrically the DVB-CI card 115 with the first PCMCIA interface 110. The DVB-CI interface 116 transmits and receives a scrambled video signal and a descrambled video signal to and from the first PCMCIA interface 110.

The DVB-CI controller 117 controls the DVB-CI interface 116 to store the scrambled video signal in the buffer 118. The DVB-CI controller 117 descrambles the scrambled video signal stored in the buffer 118. The DVB-CI controller 117 controls the DVB-CI interface 116 to transmit the descrambled video signal to the first PCMCIA interface 110.

The DVB-CI controller 117 may control the DVB-CI interface 116 to transmit the scrambled video signal stored in the buffer 118 to the first PCMCIA interface 110. That is, the DVB-CI controller 117 may control the DVB-CI interface 116 to output the scrambled video signal to be stored in the memory card 125.

The DVB-CI controller 117 may receive the scrambled video signal stored in the memory card 125 through the first PCMCIA interface 110 and the second PCMCIA interface 120. The DVB-CI controller 117 may descramble the scrambled video signal stored in the memory card 125.

The controller 130 controls the DVB-CI controller 117 to determine whether to descramble the scrambled video signal.

The buffer 118 temporarily stores the scrambled video signal so that the DVB-CI controller 117 can descramble the scrambled video signal. The buffer 118 may output the scrambled video signal stored under the control of the controller 117 to the exterior through the DVB-CI interface 116.

The memory card 125 is connected with the DTV 100 via the second PCMCIA interface 120. The memory card 125 stores the scrambled video signal input through the second PCMCIA interface 120. A nonvolatile memory may be used in the memory card 125. For example, the nonvolatile memory may be implemented as a flash memory.

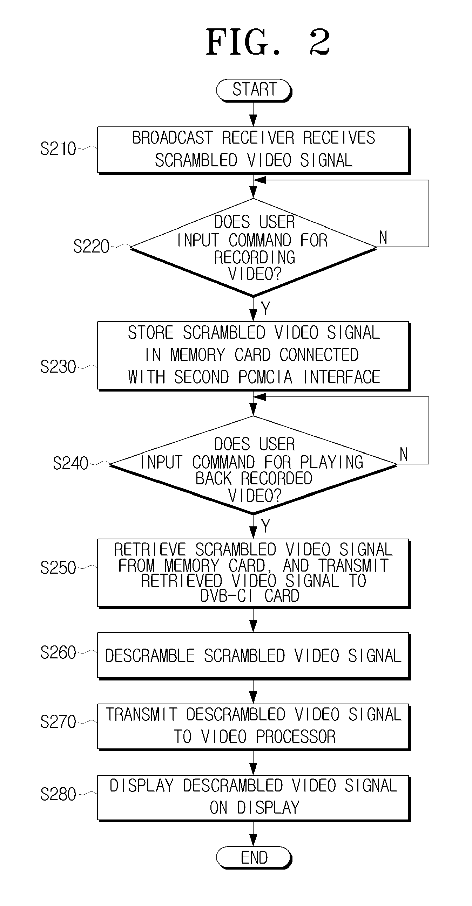

A method for providing a video signal will be explained in detail with reference to FIG. 2. FIG. 2 is a flowchart provided to explain a method for providing a video signal according to an exemplary embodiment of the present invention.

Referring to FIG. 2, the broadcast receiver 160 receives a scrambled video signal for premium broadcast content (S210).

If a user does not input a command for recording a video (S220-N), the DTV 100 is in a general premium broadcasting viewing mode. Accordingly, the scrambled video signal is descrambled at the DVB-CI card 115, and is displayed on a screen.

If a user inputs a command for recording the video (S220-Y), the controller 130 controls so that the scrambled video signal is stored in the memory card 125 connected with the second PCMCIA interface 120 (S230). More specifically, the scrambled video signal received from the broadcast receiver 160 may be transmitted to the DVB-CI card 115 through the first PCMCIA interface 110. Then, the controller 130 controls the DVB-CI controller 117 not to descramble the scrambled video signal, but instead to transmit the scrambled video signal to the first interface 110.

Then, the scrambled video signal is directly transmitted from the first PCMCIA interface 110 to the second PCMCIA interface 120. This is because the first PCMCIA interface 110 is capable of directly communicating with the second PCMCIA interface 120 through a local bus. The scrambled video signal is transmitted to the memory card 125 via the second PCMCIA interface 120, and stored in the memory card 125.

As described above, the scrambled video signal may be transmitted from the first PCMCIA interface 110 to the second PCMCIA interface 120 via the DVB-CI card 115. However, the scrambled video signal may be transmitted from the first PCMCIA interface 110 to the second PCMCIA interface 120 without passing the DVB-CI card 115.

If a user inputs a command for playing back the recorded video signal (S240-Y), the controller 130 retrieves the scrambled video signal from the memory card 125, and transmits the retrieved video signal to the DVB-CI card 115 (S250). That is, the controller 130 controls the second PCMCIA interface 120 to retrieve the scrambled video signal from the memory card 125. The controller 130 controls the first PCMCIA interface 110 so that the scrambled video signal is transmitted from the second PCMCIA interface 120 to the DVB-CI card 115.

The DVB-CI card 115 descrambles the scrambled video signal transmitted from the first PCMCIA interface 110 (S260). A general descramble operation may be conducted using a smart card (not shown) which authorizes identification to the DVB-CI card 115. The smart card may include information indicating that a user is a premium broadcast subscriber. The smart card may perform part of descramble processes by itself, or may have a decryption key in order to enable the DVB-CI card 115 to descramble the video signal. The smart card may be equipped with the DVB-CI card 115.

The DVB-CI card 115 transmits the descrambled video signal to the video processor 140 via the first PCMCIA interface 110 (S270). If the first PCMCIA interface 110 receives the descrambled video signal, the controller 130 controls the first PCMCIA interface 110 to transmit the descrambled video signal to the video processor 140.

The descrambled video signal is processed at the video processor 140, and is displayed on the display through the video output 150 (S280).

The method for providing the video signal and the video apparatus using the method have been explained with reference to FIGs. 1 and 2.

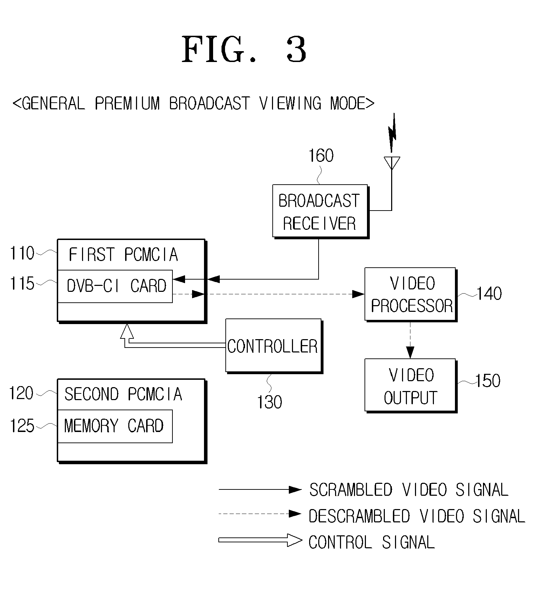

A flow of a scrambled video signal and a descrambled video signal will be explained in detail with reference to FIGs. 3 to 5. FIG. 3 is a view illustrating a flow of a scrambled video signal and a descrambled video signal in a premium broadcast viewing mode according to an exemplary embodiment of the present invention.

Referring to FIG. 3, the scrambled video signal received through the broadcast receiver 160 is transmitted to the first PCMCIA interface 110 in a general premium broadcast viewing mode.

The scrambled video signal is transmitted to the DVB-CI card 115 which is connected with the first PCMCIA interface 110. The scrambled video signal is descrambled at the DVB-CI card 115, and the descrambled video signal is transmitted to the first PCMCIA interface 110.

The descrambled video signal is transmitted from the first PCMCIA interface 110 to the video output 150 via the video processor 140. The above operations are executed according to the control of the controller 130 on the first PCMCIA interface 110.

By doing so, a subscriber to a premium broadcast can watch the premium broadcast while a non-subscriber is not allowed to view the premium broadcast because the scrambled video signal is not descrambled at the DVB-CI card 115.

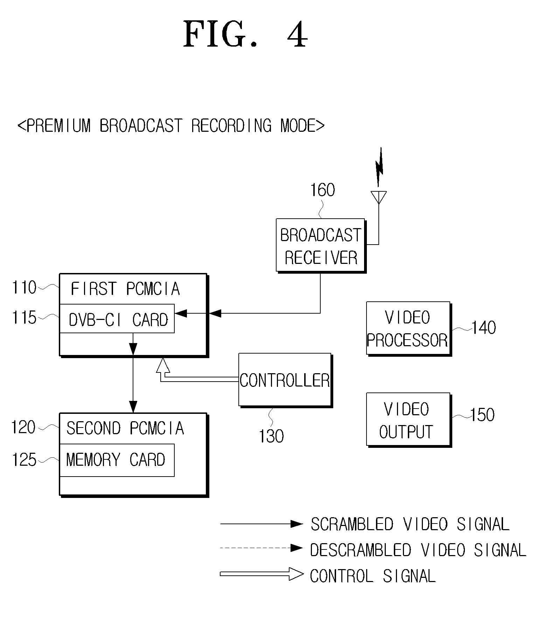

FIG. 4 is a view illustrating a flow of a scrambled video signal and a descrambled video signal in a premium broadcast recording mode according to an exemplary embodiment of the present invention.

Referring to FIG. 4, if a user inputs a command for recording a video signal, a scrambled video signal received through the broadcast receiver 160 is transmitted to the first PCMCIA interface 110.

The scrambled video signal may be directly transmitted from the first PCMCIA interface 110 to the second PCMCIA interface 120. The controller 130 determines that the DTV 100 is in a recording mode, and controls the DVB-CI controller 117 not to descramble the scrambled video signal at the DVB-CIA card 115. Accordingly, the scrambled video signal is transmitted to the DVB-CI card 115, and is then transmitted to the first PCMCIA interface 110. The scrambled video signal is then stored in the memory card 125 connected with the second PCMCIA interface 120. It should be noted that the scrambled video signal may be directly transmitted from the first PCMCIA interface 110 to the second PCMCIA interface 120 without passing the DVB-CI card 115.

The process of directly transmitting the scrambled video signal from the first PCMCIA interface 110 to the second PCMCIA interface 120 does not require a separate format conversion. This is because the first and second interfaces 110 and 120 use the same type of interfaces.

Through the above operations, the scrambled video signal may be stored in the memory card 125.

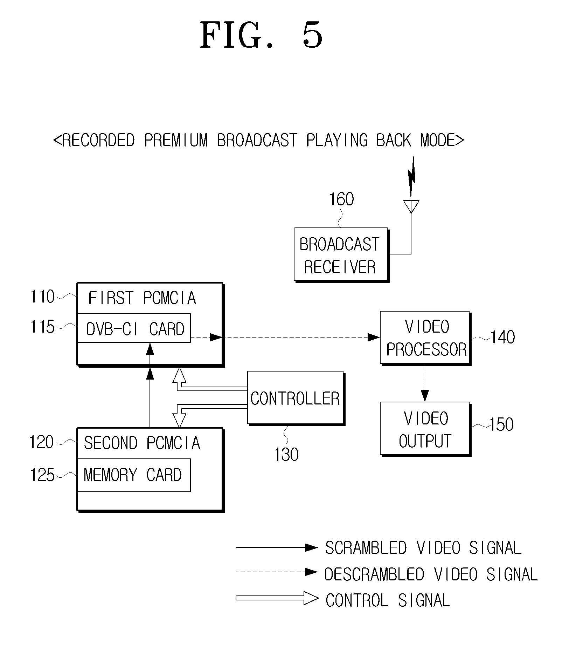

FIG. 5 is a view illustrating a flow of a scrambled video signal and a descrambled video signal in a recorded premium broadcast playing back mode according to an exemplary embodiment of the present invention.

Referring to FIG. 5, if a user inputs a command for playing back a recorded premium broadcast, a scrambled video signal stored in the memory card 125 is transmitted to the first PCMCIA interface 110 via the second PCMCIA interface 120.

The scrambled video signal is transmitted to the DVB-CI card 115 connected with the first PCMCIA interface 110, and is descrambled by the DVB-CI card 115. The descrambled video signal is transmitted to the video processor 140 through the first PCMCIA interface 110. The controller 130 controls the first PCMCIA interface 110 and the second PCMCIA interface 120 to descramble the video signal.

The video processor 140 processes the descrambled video signal, and transmits the processed descrambled video signal to the video output 150. The video output 150 displays the descrambled video signal on a display.

The user can use a PVR function for premium broadcast by the processes illustrated in FIGs. 4 and 5.

The flows of the scrambled video signal and the descrambled video signal in the various modes have been explained in detail with reference to FIGs. 3 to 5.

While a descramble card for conducting conditional access is the DVB-CI card in the exemplary embodiment of the present invention, alterative descramble cards may be applied. For example, the present invention is applicable to a cable card for an open cable DTV or a cable ready DTV used in North America, for conditional access for specific broadcast.

While the DTV 100 is provided as a video apparatus in the exemplary embodiment of the present invention, other video apparatuses such as a set-top box, a digital multimedia broadcast (DMB) receiver, and a PVR may be applied.

As described above, a video apparatus which stores a scrambled video signal in a storage medium, a descramble card, and a method for providing a video signal using the same are provided according to the exemplary embodiment of the present invention. Accordingly, a user can use a PVR function for premium broadcast contents.

As a descramble card and a memory card use PCMCIAs of the same type interface, a scrambled video signal may be stored without processing separate data conversion between the descramble card and the memory card.

The scrambled video signal is stored in the storage medium. Accordingly, although a subscriber to premium broadcast contents provides other users with the storage medium containing the premium broadcast contents, unauthorized users cannot play back the premium broadcast contents. As a result, copyright problems such as unauthorized broadcast copying are solved.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video apparatus comprising:
a first interface (110) which receives a scrambled video signal, and outputs the scrambled video signal;
a second interface (120) which transmits the scrambled video signal to a storage medium (125) connected with the video apparatus; and
a controller (130) which controls the first interface (110) to transmit the scrambled video signal to the second interface (120).

2. The apparatus of claim 1, wherein the controller (130) controls the second interface (120) to store the scrambled video signal in the storage medium (125) in a scrambled state.

3. The apparatus of claim 1 or claim 2, wherein the first interface (110) and the second interface (120) are the same type of interface.

4. The apparatus of any preceding claim, wherein the first interface (110) and the second interface (120) are in compliance with the personal computer memory card international association, PCMCIA, standard.

5. The apparatus of any preceding claim, wherein the first interface (110) is connected with a descramble card (115) which descrambles the scrambled video signal.

6. The apparatus of any preceding claim, further comprising:
a video processor (140) which performs a signal processing of a descrambled video signal,
wherein the first interface (110) receives the descrambled video signal from a descramble device, and outputs the descrambled video signals to the video processor (140), and the controller (130) controls the first interface (110) to transmit the descrambled video signal to the video processor (140).

7. The apparatus of any preceding claim, wherein the storage medium (125) connected with the second interface (120) is a nonvolatile memory.

8. The apparatus of claim 7, wherein the nonvolatile memory is a flash memory.

9. The apparatus of any preceding claim, wherein the scrambled video signal is a video signal of a premium broadcast content.

10. A method for providing a video signal in a video apparatus, the method comprising:
receiving a scrambled video signal, and outputting the scrambled video signal by a first interface (110); and
controlling a second interface (120) to transmit the scrambled video signal output from the first interface (110) to a storage medium (125) connected with the video apparatus.

11. The method of claim 10, wherein the scrambled video signal is stored in the storage medium (125) in a scrambled state.

12. The method of claim 10 or claim 11, wherein the first interface (110) and the second interface (120) are the same type of interface.

13. The method of any one of claims 10 to 12, wherein the first interface (110) and the second interface (120) are in compliance with the personal computer memory card international association, PCMCIA, standard.

14. The method of of any one of claims 10 to 13, further comprising:
retrieving the scrambled video signal from the storage medium (125) and transmitting the retrieved video signal to a descramble device; and
descrambling the retrieved video signal by the descramble device.

15. The method of of any one of claims 10 to 14, further comprising:
receiving a descrambled video signal corresponding to the scrambled video signal by the first interface (110); and
transmitting the descrambled video signal output from the first interface (110) to a video processor (140).

16. The method of of any one of claims 10 to 15, wherein the storage medium (125) connected with the second interface (120) is a nonvolatile memory.

17. The method of claim 16, wherein the nonvolatile memory is a flash memory.

18. The method of of any one of claims 10 to 17, wherein the scrambled video signal is a video signal of a premium broadcast.

19. A descramble card comprising:
an interface which receives a scrambled video signal; and
a controller (130) which controls the interface to store the scrambled video signal in a storage medium (125), and descrambles the scrambled video signal.

20. The descramble card of claim 19, wherein the controller (130) retrieves the scrambled video signal from the storage medium (125) to descramble the retrieved video signal.

21. The descramble card of claim 19 or claim 20, wherein the descramble card (115) is a digital video broadcasting-common interface (DVB-CI) card.

22. A video apparatus comprising:
a first interface (110) which receives a video signal, and outputs the received video signal;
a second interface (120) which transmits the received video signal to a storage medium (125) connected with the video apparatus; and
a controller (130) which controls the first interface (110) to directly transmit the video signal output from the first interface (110) to the second interface (120),
wherein the first interface (110) and the second interface (120) are the same type of interface.

23. The apparatus of claim 22, further comprising:
a bus which electrically connects the first interface (110) with the second interface (120),
wherein the controller (130) controls the first interface (110) to directly transmit the video signal output from the first interface (110) through the bus to the second interface (120).

24. A method for providing a video signal comprising:
receiving a video signal, and outputting the received video signal by a first interface (110); and
directly receiving the video signal output from the first interface (110), and transmitting the received video signal to a storage medium (125) by a second interface (120),
wherein the first interface (110) and the second interface (120) are the same type of interface.

25. The method of claim 24, wherein the video signal output from the first interface (110) is received by the second interface (120) through a bus which electrically connects the first interface (110) with the second interface (120).
